# EUROPÄISCHE PATENTSCHRIFT

(11) **EP 2 944 090 B1**
(45) Veröffentlichungstag und Bekanntmachung des Hinweises auf die Patenterteilung: **13.03.2019**
(21) Anmeldenummer: 14701296.7
(22) Anmeldetag: 07.01.2014
(51) Int. Cl.: H04N 7/56, H04N 21/214, H04N 21/235, H04N 21/254, H04N 21/43, H04N 21/4405, H04N 21/4627, H04N 21/472, H04N 21/835

(54) **DATENNETZWERK, VERFAHREN SOWIE ABSPIELGERÄT ZUR WIEDERGABE VON AUDIO- UND VIDEODATEN IN EINEM IN-FLIGHT ENTERTAINMENT SYSTEM**
DATA NETWORK, METHOD AND PLAYBACK DEVICE FOR PLAYING BACK AUDIO AND VIDEO DATA IN AN IN-FLIGHT ENTERTAINMENT SYSTEM
RÉSEAU DE DONNÉES, PROCÉDÉ AINSI QUE LECTEUR PERMETTANT DE REPRODUIRE DES DONNÉES AUDIO ET VIDÉO DANS UN SYSTÈME DE DIVERTISSEMENT EN VOL

(30) Priorität: 09.01.2013 DE 102013200171
(43) Veröffentlichungstag der Anmeldung: 18.11.2015
(73) Patentinhaber: Lufthansa Technik AG, 22335 Hamburg (DE)
(72) Erfinder: SAKOWSKI, Martin, 22525 Hamburg (DE); MONICKE, Arndt, 22955 Hoisdorf (DE); ABDALLA, Samer, 22299 Hamburg (DE)
(74) Vertreter: Müller Verweyen
(86) Internationale Anmeldenummer: PCT/EP2014/050113
(87) Internationale Veröffentlichungsnummer: WO 2014/108379

(56) Entgegenhaltungen:
- US-A- 5 570 372
- US-A1- 2006 290 810
- US-A1- 2008 187 282

## Beschreibung

Die Erfindung betrifft ein Datennetzwerk zur Wiedergabe von Audio- und Videodaten in einem In-flight Entertainment System mit den Merkmalen des Oberbegriffs von Anspruch 1 sowie ein entsprechendes Verfahren zur Wiedergabe von Audio- und Videodaten in einem In-flight Entertainment System mit den Merkmalen des Oberbegriffs von Anspruch 8. Die Erfindung betrifft weiterhin ein Abspielgerät zum Auslesen von Audio- und Videodaten eines Datenträgers mit den Merkmalen des Oberbegriffs von Anspruch 15.

Über In-flight Entertainment Systeme (auch "IFE Systeme" genannt) werden den Passagieren von Flugzeugen zur Unterhaltung über elektronische Geräte Audio- und Videodaten zur Verfügung gestellt.

Damit die Wiedergabe der Daten für den Betrachter als angenehm empfunden wird, werden Videodaten mit einer bestimmten Anzahl von Bildern pro Sekunde dargestellt, so dass die Wiedergabe für das menschliche Auge flüssig erscheint. Zudem müssen die Bilder mit einer bestimmten Anzahl an Bits dargestellt werden, damit genügend Bildinformationen vorhanden sind, ein scharfes Bild darzustellen.

Audiodaten werden mit einer bestimmten Anzahl an Sample pro Sekunde wiedergegeben, damit ein für das menschliche Ohr angenehmes Klangerlebnis entsteht.

Bei kombinierter Wiedergabe von Audio- und Videodaten müssen diese synchron wiedergegeben werden. Eine unter Umständen auftretende zeitliche Abweichung der Wiedergabe von zusammengehörenden Bildern und Geräuschen darf eine bestimmte Grenze nicht überschreiten.

Zudem ist es von hoher Bedeutung den urheberrechtlichen Schutz der wiedergegebenen Daten zu gewährleisten. Das bedeutet, dass Maßnahmen vorgesehen werden müssen, um unberechtigte Zugriffe zu verhindern. Für die Wiedergabe von Blu-rays sind dabei zwingend die Vorgaben des sogenannten Advanced Access Content System (AACS) Adopter Agreements zu beachten. Zur Kontrolle der Nutzung von digitalen Medien können sogenannte digitale Rechtemanagement Systeme (DRM Systeme) eingesetzt werden, die eine technische Sicherheitsmaßnahme darstellen, mit der dem Rechteinhaber von Informationsgütern die Möglichkeit gegeben wird, die Art der Nutzung ihres Eigentums durch Nutzer auf Basis einer zuvor getroffenen Nutzungsvereinbarung zu erzwingen.

Darüber hinaus muss das IFE System möglichst ohne signifikante Verzögerungen auf die Eingabe des Nutzers reagieren, so dass beispielsweise die Bedienung bzw. die Menüführung nicht als unangenehm schwerfällig empfunden wird.

Bei der Umsetzung dieser Anforderungen sind zwei wesentliche Punkte zu beachten: Grundsätzlich beansprucht jede Operation zur Datenverarbeitung eine gewisse Laufzeit. Durch die Laufzeit entsteht eine Verzögerung zwischen dem Zeitpunkt der Bereitstellung der Daten am Systemeingang und der Wiedergabe der Daten am Systemausgang. Diese Verzögerung wird als Latenz bezeichnet.

Jedoch ist die Latenz bei derselben Operation aufgrund von unterschiedlichen Einflussfaktoren, wie beispielsweise der variablen Bitrate des Videosignals oder schwankender Prozessorauslastung, nicht immer gleich groß. Abweichungen von der mittleren Latenz werden als Laufzeitschwankungen bezeichnet, wobei sich der Betrag der Laufzeitschwankungen bei mehreren aufeinanderfolgenden Operationen deutlich vergrößern kann.

Wenn die Laufzeitschwankungen eine bestimmte Größe erreichen, können die Daten nicht zum benötigten Zeitpunkt oder in der benötigten Reihenfolge an dem Wiedergabeausgang des Systems bereitgestellt werden, so dass die Wiedergabe fehlerhaft wird.

Um diesem Problem der Latenz und der Laufzeitschwankungen entgegenzuwirken, gibt es im Stand der Technik unterschiedliche Ansätze.

Eine Möglichkeit zur Reduzierung von Latenz und Laufzeitschwankungen ist das Verwenden von Punkt-zu-Punkt Systemen, bei denen jede Datenquelle separat mit dem Bestimmungsort der Daten, der sogenannten "Datensenke", verbunden ist. Zwar kann auf diese Weise gänzlich auf ein Datennetzwerk verzichtet und eine ganze Reihe von etwaigen Problemen ausgeschlossen werden, jedoch bieten Punkt-zu-Punkt Verbindungen keine flexiblen Datenpfade.

US 2009/0073316 A1 offenbart eine Punkt-zu-Punkt Übertragung von Audio- und Videosignalen von einer Quelle zu einer Senke. Das Quellgerät fragt die totale Latenz des Videosignals (Summe der Latenzen der Geräte des Videoübertragungspfads) über eine Up-Leitung ab und überträgt die totale Latenz des Videosignals an die Geräte des Audioübertragungspfads über den Audioübertragungspfad. Mithilfe eines im Audiopfad angeordneten Controllers wird die Differenz zwischen der totalen Latenz des Videosignals und der Audiolatenz bestimmt und das Audiosignal um diese Differenz verzögert. Durch die Abfrage der totalen Latenz des Videosignals über die Up-Leitung und die dynamische Steuerung bzw. Regelung der Audio-Verzögerungszeit in dem Controller wird eine unerwünschte zusätzliche Verzögerungszeit generiert.

Bei netzwerkbasierten Systemen, die zur Wiedergabe von Audio- und Videodaten an verschiedenen Wiedergabegeräten dienen, werden, nachdem die Daten beispielsweise aus einem Datenträger ausgelesen wurden, üblicherweise die folgenden Schritte nacheinander durchgeführt.
a) Datenkompression
   Die Rohdaten werden mit einem passenden Datenformat komprimiert, um die zur kontinuierlichen Datenübertragung benötigte Bandbreite zu erreichen. Dieser Vorgang erfolgt getrennt für Audio- und Videodaten.
b) Erstellen von Datencontainern
   Die komprimierten Audio- und Videodaten werden entsprechend des verwendeten Containerformats zusammengefasst.
c) Datenverschlüsselung
   Die Datencontainer werden mit dem vom jeweiligen DRM System eingesetzten Algorithmus verschlüsselt.
d) kontinuierliche Datenübertragung
   Die verschlüsselten Daten werden in Ethernetkompatible Datenpakete verpackt und über das Netzwerk an die verschiedenen Wiedergabegeräte versandt (Datenstreaming). Am Wiedergabegerät werden die Datenpakete wieder entpackt.
e) Datenentschlüsselung
   Die Datencontainer werden gemäß dem zugehörigen DRM Entschlüsselungsalgorithmus entschlüsselt.
f) Auflösen der Datencontainer
   Die Datencontainer werden aufgelöst und die Audio- und Videodaten werden wieder getrennt behandelt.
g) Datendekompression
   Die entschlüsselten Daten werden dekomprimiert.
h) Synchronisation
   Die dekomprimierten Daten werden zwischengespeichert, wobei eine Synchronisationsmethode sicherstellt, dass die Audio- und Videodaten so aus dem Zwischenspeicher an den darauffolgenden digital/analogen Datenumwandler weitergegeben werden, dass sie nach der Umwandlung gleichzeitig wiedergegeben werden.
i) digital/analoge Datenumwandlung
   Die digitalisierten Daten werden in analoge Signale umgewandelt.
j) Wiedergabe
   Die Daten werden durch Wiedergabegeräte, wie beispielsweise Bildschirme und Lautsprecher, ausgegeben.

Um die während des Verfahrens auftretenden Laufzeitschwankungen auszugleichen, wird den Datenpaketen durch das Übertragungsprotokoll des Netzwerks eine Sequenznummer und ein Zeitstempel hinzugefügt. Die Daten werden in einen Zwischenspeicher (Puffer) geschrieben und innerhalb eines bestimmten Taktes ausgelesen. Auf diese Weise ist sichergestellt, dass die Daten zu einem vorherbestimmten Zeitpunkt für die Folgeoperationen zur Verfügung stehen. Je größer dabei die Zeitintervalle zwischen den Auslesevorgängen sind, desto größere Laufzeitschwankungen können ausgeglichen werden. Diese Vorgehensweise ist beispielsweise in der Druckschrift US 2011/0231566 A1 beschrieben. Eine durch die Kompression oder Übertragung der Daten hervorgerufene Änderung der Paketfolge wird ebenfalls auf diese Weise korrigiert.

Zur Verringerung der Latenz ist es bekannt, die Arbeitsweise eines einzelnen oder von mehreren Puffern zu optimieren. Hierzu ist eine Reihe von Verfahren bekannt.

Aus der Druckschrift GB 2 417 866 A ist es bekannt, mehrere Puffer gleichzeitig zu verwenden. Dabei werden die Puffer in schneller Folge nacheinander verwendet. Wenn ein Puffer bei der Ansprache bereits Daten verarbeitet, wird der nächste freie Puffer angesteuert. Zusätzlich werden die Puffer der Reihe nach abgerufen. Hat der aufgerufene Puffer ein vollständiges Datenpaket gespeichert, wird dieses versendet. Wenn dies nicht der Fall ist, wird stattdessen ein leeres Datenpaket übermittelt. Nach der Übermittlung werden die Datenpakete erneut zwischengespeichert und entsprechend der zuvor beschriebenen Vorgehensweise sortiert.

Aus der Druckschrift WO 2011/031853 A1 ist eine Methode bekannt, bei der die kontinuierliche Datenübertragung (das Datenstreaming) mit der kleinstmöglichen Bitrate begonnen und später adaptiv verändert wird. Durch die geringere Datenmenge kann der Zeitraum zum Zwischenspeichern verkürzt werden. Im Verlauf der kontinuierlichen Datenübertragung wird die vom Netzwerk zur Verfügung gestellte Bandbreite gemessen und die Bitrate entsprechend erhöht. Gleichzeitig wird auch der Speicherplatz des Puffers auf sein Maximum erweitert. Im weiteren Verlauf kann bei einer Veränderung der zur Verfügung stehenden Bandbreite die Bitrate wieder angepasst werden.

Des Weiteren sind aus den Druckschriften US 2006/0230171 A1 und US 2007/0011343 A1 Methoden zur adaptiven Bildfrequenzanpassung bekannt, die die Latenz bei der Anwahl eines alternativen Kanals zur kontinuierlichen Datenübertragung verringern. Sobald ein neuer Kanal angewählt wird, verringert eine Initiationssequenz die übertragene Bildfrequenz und löscht den zum Ausgleich von Laufzeitschwankungen verwendeten Puffer. Der freie Zwischenspeicher beginnt sofort mit der Speicherung der Daten des neuen Kanals. Sobald der Puffer bis zu einem bestimmten Wert angefüllt ist, beginnt die Wiedergabe und die Bildfrequenz wird nach und nach bis zu dem gewünschten Maximum erhöht.

Zur Synchronisation ist es beispielsweise aus der Druckschrift CA 2676075 A1 bekannt, mehrere Taktgeber und einen den Datenpaketen aufgeprägten Zeitstempel zu verwenden. Die über den Zeitstempel messbare Übertragungsdauer wird genutzt, um zusammen mit einer für Audio- und Videodaten getrennt berechneten Verzögerung die Ausgabetakte dynamisch anzupassen.

Aus der US 2008/0187282 A1 ist ein System zum Synchronisieren des Abspielens von Audio und Video bekannt, wobei encodierte bzw. komprimierte Audio/Videodaten in einem einzigen, einheitlichen Audio-/Video-Paketdatenstrom von einer Datenquelle über ein Verteilungsnetzwerk an Audio/Video Abspielgeräte übertragen werden. Die Datenquelle stellt eine Master-Timing-Komponente des Systems dar. Der Decoder in einem Audio/Video Abspielgerät gibt die Audio/Videodaten so wieder, dass eine feste Verzögerung zwischen den Quelldaten und der Präsentation des Videos oder Audios aufrechterhalten wird, wobei eine Synchronisation zwischen sämtlichen Video- und Audio-Abspielgeräten unterhalb von 66 ms angestrebt wird.

Die US 2006/0290810 A1 offenbart ein Heimkinosystem, bei dem Laufzeitunterschiede zwischen Video- und Audiodaten mittels einer Verzögerungsabstimmeinheit vom Anwender durch Ermitteln und Festlegen einer Verzögerung in einer aufwändigen Prozedur ausgeglichen werden müssen.

Sowohl die Systeme mit Punkt-zu-Punkt Verbindungen als auch die netzwerkbasierten Systeme weisen Nachteile auf. Der Hauptnachteil bei Punkt-zu-Punkt Verbindungen liegt in der sehr geringen Flexibilität der Datenverteilung. Die auf einem Gerät vorhandenen Daten können nur an ein anderes Gerät übermittelt werden, wenn beide Geräte über eine eigene Leitung miteinander verbunden sind.

Dabei entsteht durch die Menge der verwendeten Kabel ein hohes Gewicht, was insbesondere im Flugzeugbau ein erheblicher Nachteil ist.

Die als Alternative in Frage kommenden netzwerkbasierten Systeme mit Lösungen zum Ausgleich von Laufzeitschwankungen und zur Synchronisation von Audio- und Videowiedergabe sind jedoch latenzbehaftet. Das bedeutet, dass sie die Datenlaufzeit und damit die Reaktionszeit des Systems auf Interaktionen verlängern. Dadurch wird die Bedienbarkeit des Systems beeinträchtigt.

Die bekannten Lösungen zur Herabsetzung der Latenz können diese Probleme insbesondere bei hochauflösenden Videodaten nicht befriedigend lösen. Als hochauflösende Videodaten, auch "HD" (engl. high definition) Videodaten, werden solche bezeichnet, die eine Auflösung von 720p oder mehr aufweisen. Bei der gleichzeitigen Verwendung mehrerer Puffer tritt dabei das Problem auf, dass bei großen Datenpaketen eine lange Verarbeitungs- und Übertragungszeit entstehen kann. Da die Daten nur in einer vorbestimmten Reihenfolge wiedergegeben werden können, müssen Pakete, die schneller übermittelt werden, nach der Übermittlung zwischengespeichert werden. Die Zeitersparnis ist aus diesem Grund gering.

Eine Verringerung der Bitrate führt zu einer schlechteren Bildqualität, da pro Bild weniger Informationen übertragen werden können. Die Verringerung der Bildfrequenz verschlechtert zudem die Wiedergabe von Bewegungen. Außerdem besteht die Gefahr, dass beim Unterschreiten einer Bildfrequenz von ca. 15 Bildern pro Sekunde die Wiedergabe ins Stocken gerät.

Der Erfindung liegt somit die Aufgabe zugrunde, ein Datennetzwerk zur Wiedergabe von Audio- und Videodaten in einem In-flight Entertainment System sowie entsprechendes Verfahren und ein entsprechendes Abspielgerät zu schaffen, bei dem die oben genannten Probleme reduziert sind.

Die Erfindung löst die Aufgabe mit den Merkmalen der unabhängigen Ansprüche.

Demnach wird zur Lösung der Aufgabe ein Datennetzwerk eines In-flight Entertainment Systems mit den Merkmalen des Anspruchs 1 vorgeschlagen.

Zur Lösung der Aufgabe wird weiterhin ein Verfahren zur Wiedergabe von Audio- und Videodaten über ein Datennetzwerk eines In-flight Entertainment System mit den Merkmalen des Anspruchs 6 vorgeschlagen.

Weiterhin wird zur Lösung der Aufgabe ein Abspielgerät zum Auslesen von Audio- und Videodaten eines Datenträgers für ein In-flight Entertainment System mit den Merkmalen des Anspruchs 13 vorgeschlagen.

Durch die getrennte Übermittlung der Audio- und Videodaten wird auf die Verwendung von üblicherweise eingesetzten Datencontainern, die sowohl Audio- als auch Videodaten enthalten, verzichtet, wodurch das Datennetzwerk insgesamt deutlich einfacher gestaltet werden kann, da die Daten nicht aufwendig synchronisiert werden müssen. Die Wiedergabesynchronität der Audio- und Videodaten wird über die Vorhersagbarkeit der Datenlaufzeit und entsprechende Verzögerung des schnelleren Übertragungsweges hergestellt, wodurch auf bekannte latenzbehaftete Synchronisationsmethoden verzichtet werden kann. Vorteilhaft werden die Audio- und Videodaten ebenfalls getrennt voneinander encodiert bzw. komprimiert.

Die Laufzeit von Daten in einem System ist unter bestimmten Bedingungen vorhersagbar. Die Vorhersagbarkeit wird dazu genutzt, Audio- und Videodaten synchron wiederzugeben, ohne die Laufzeit adaptiv messen oder aber Schwankungen mit groß dimensionierten Puffern ausgleichen zu müssen.

Durch die Optimierung der latenzbehafteten Synchronisation ist die Laufzeit des Gesamtsystems trotz Datenverschlüsselung und Videokodierung so gering, dass die Echtzeitfähigkeit erhalten bleibt.

Dementsprechend werden die Komponenten des Systems, die zum Verarbeiten von Audio- und Videodaten eingesetzt werden, und die Netzwerkarchitektur vorzugsweise so gewählt, dass die erforderlichen Operationen in vorherbestimmten Laufzeiten durchgeführt werden. Die unbedingt benötigten Puffer werden so ausgelegt, dass die dadurch verursachte Verzögerung minimal ist. Führen zwei verschiedene Komponenten die gleiche Operation aus, sind sie so konstruiert, dass die Operation an beiden Komponenten die gleiche Laufzeit aufweist.

Die hochauflösenden Videodaten weisen vorzugweise eine Auflösung von mindestens 720p auf. Weiter bevorzugt sind Auflösungen von mindestens 1080p. Mit 720p bzw. 1080p werden Vertikalauflösungen mit 720 Zeilen bzw. 1080 Zeilen bezeichnet. Bei der Verschlüsselung und Übermittlung derartiger Videodaten treten hohe Datenvolumen auf, die jedoch durch das erfindungsgemäße Datennetzwerk bzw. Verfahren im Wesentlichen synchron wiedergegeben werden können.

Im Wesentlichen synchron bedeutet in diesem Zusammenhang, dass die Latenz zwischen der Wiedergabe der Audio- und Videodaten unter der Wahrnehmungsschwelle des menschlichen Betrachters liegt. Erfindungsgemäß werden die Audio- und Videodaten mit einer Latenz von weniger als 0,5 Sekunden, bevorzugt weniger als 0,3 Sekunden, weiter bevorzugt weniger als 0,1 Sekunden wiedergegeben.

Dementsprechend sind die Komponenten des Datennetzwerks, die zum Verarbeiten der Audio- und Videodaten eingesetzt werden, vorzugsweise so verwendbar, dass die Zeitdauer ihrer Operationen vorzugsweise deterministisch ist. Wenn die benötigte Bearbeitungszeit der Komponenten bekannt und ggf. konstant ist, können die einzelnen Komponenten so zusammengestellt werden, dass auch ohne viele Zwischenpuffer eine Synchronität der Audio- und Videodaten erreicht werden kann. Dazu ist die Datenwiedergabe der Audio- oder der Videodaten um eine vorbestimmte Zeitdauer verzögert, wobei die Datenwiedergabe erfindungsgemäß um eine Zeitdauer verzögert ist, die dem Differenzbetrag der Laufzeiten der Audio- und Videodaten entspricht.

Je nach ausgewählten Komponenten des Netzwerks brauchen die Audio- und Videodaten unterschiedlich lange, um vom Datenträger zum Ausgabegerät übertragen zu werden. Wenn diese Zeitdauer ermittelt ist, können die schnelleren Daten um die bekannte Zeitdauer verzögert werden, wodurch eine im Wesentlichen synchrone Darstellung gewährleistet werden kann. Um die Zeitdauer möglichst einfach bestimmen zu können, sind die eingesetzten Komponenten vorzugsweise so ausgewählt, dass sie jeweils die gleiche Laufzeit für die gleiche Operation benötigen.

Die Verzögerung der Audiodaten zur Synchronisation mit den Videodaten erfolgt vorzugsweise im Zuge des Schrittes e) oder f). Die Laufzeit der Audiodaten ist in der Regel kürzer, da diese bevorzugt nicht verschlüsselt und entschlüsselt werden.

Sollte aus einem Grund die Laufzeit der Audiodaten länger als die der Videodaten sein, können auch die Videodaten zur Synchronisation entsprechend verzögert werden. Die vorbestimmte Zeitdauer entspricht dann ebenfalls dem Differenzbetrag der Laufzeiten der Audio- und Videodaten.

Erfindungsgemäß werden die Audio- und Videodaten somit beim Schritt c), der kontinuierlichen Datenübertragung (dem "Datenstreaming"), getrennt voneinander über das Datennetzwerk übermittelt. Weiter bevorzugt durchlaufen sie nicht nur den Schritt c), sondern zusätzlich auch die Schritte a), e) und f) getrennt voneinander. Das bedeutet, sie werden getrennt voneinander komprimiert, dekomprimiert, von digitalen zu analogen Signalen verarbeitet und letztlich zusammen wiedergegeben, so dass das Datennetzwerk weniger komplex ausgelegt werden kann. "Zusammen wiedergegeben" bedeutet dabei, dass die Bilder gleichzeitig mit dem zugehörigen Ton synchron wiedergegeben werden, ohne dass beide durch dasselbe Wiedergabegerät ausgegeben werden müssen.

Im Schritt a) werden die Audiodaten vorzugsweise mit maximal 48 kHz und 16 Bits erzeugt. Das bedeutet, dass eine Kompressionsmethode für die Audiodaten gewählt wird, die Audiosamples mit nicht mehr als 48 kHz und 16 Bits erzeugt. Dieses hat den Vorteil, dass eine Verschlüsselung der Audiodaten nicht gemäß des AACS vorgeschrieben ist, die Audiosamples jedoch trotzdem eine für den Einsatz im Flugzeug ausreichende Klangqualität aufweisen.

Im Schritt a) werden die Videodaten vorzugsweise durch eine Intra- und Interframe Kodierung erzeugt. Bei der Intraframe Kodierung wird jedes Einzelbild ("Frame") komprimiert. Derartig intraframekodierte Einzelbilder werden als "I-Frames" bezeichnet. Im Gegensatz dazu werden bei der Interframe Kodierung gleichbleibende Bildelemente in Bildfolgen zusammengefasst. Die sog. "Predicted-Frames" (P-Frames) werden aus den vorhergehenden I-Frames errechnet. Die zu übertragende Bildgruppe wird vorzugsweise derart zusammengestellt, dass sie Bilder für einen vorbestimmten Zeitraum, beispielsweise eine Sekunde, enthalten und nur aus I-Frames und P-Frames gebildet werden. Zusätzlich erfolgt die Aktualisierung des Initialisierungsvektors der Verschlüsselung des DRM-Systems bevorzugt in Abhängigkeit von der Videocodierung, wobei der Initialisierungsvektor anteilig in Abhängigkeit der I-Frames als auch anteilig in Abhängigkeit der folgenden abhängigen Frames sowie in Abhängigkeit einzelner Verschlüsselungspakete generiert wird. Auf diese Weise kann sichergestellt werden, dass ein Paketverlust sowie das Ausmaß des Paketverlusts detektiert wird und dann der Initialisierungsvektor der Verschlüsselung zwischen Encoder und Decoder ohne zusätzlichen Verlust von Daten innerhalb eines Frames wieder synchronisiert ist. Dadurch ist die Aktualisierung der Daten für die Verschlüsselung von der Art der übertragenen Bilddaten und nicht von der übertragenen Datenmenge abhängig.

Die zu schützenden Inhalte werden vor und nach der Verschlüsselung durch das DRM-System vorzugsweise mit dem HDCP (Highbandwidth Digital Content Protection) Verschlüsselungssystem und einer HDMI-Verbindung übertragen. Das Wiedergabegerät sendet während der kontinuierlichen Datenübertragung in regelmäßigen Abständen die HDCP-Standard vorgeschriebenen "System Renewability Message" (SRM) vom Datenträger an die übertragenden Systemkomponenten. Dadurch kann die Sicherheit der Datenübertragung von hochauflösenden, AACS geschützten Inhalten von der Quelle bis zur Senke sichergestellt werden.

Der Begriff "kontinuierliche Datenübertragung" bedeutet im Rahmen der vorliegenden Anmeldung insbesondere "Streaming Media", wobei ausschließlich Audio/Video-Signale, und gegebenenfalls damit unmittelbar zusammenhängende Steuerdaten, kontinuierlich übertragen werden. Über den gesamten Streaming Media-Vorgang findet vorteilhaft eine Quasi-Echtzeitübertragung der Audio/Video-Signale statt. Video- und Audiosignale werden vorteilhaft komprimiert über ein Datennetzwerk übertragen, wobei mittels eines Encoders das Video- und Audiosignal in ein komprimiertes Signal umgewandelt wird. Das komprimierte Video- und Audiosignal wird daraufhin vorteilhaft über ein verbindungsloses oder verbindungsorientiertes Transportprotokoll in Datagrammen von der Datenquelle, dem Encoder, zu einer oder mehreren Datensenken, den Decodern, über ein paketorientiertes Netzwerk transportiert. Die Datagramme werden vorteilhaft von der Datensenke, einem Decoder, wieder in unkomprimierte Video- und Audiosignale umgewandelt.

Ein Datennetzwerk ist im Rahmen der vorliegenden Anmeldung vorteilhaft ein Datenkommunikationssystem, das die Übertragung von Daten zwischen mehreren unabhängigen, vorzugsweise gleichberechtigten und/oder partnerschaftlich orientierten Datenstationen, z.B. Computern, vorteilhaft mit hoher Übertragungsgeschwindigkeit und Güte ermöglicht. Ein Datenkommunikationssystem ist dabei insbesondere ein räumlich verteiltes Verbindungssystem zur technischen Unterstützung des Austauschs von Information zwischen Kommunikationspartnern.

Die Erfindung wird im Folgenden anhand bevorzugter Ausführungsformen unter Bezugnahme auf die beigefügte Figur erläutert. Dabei zeigt:

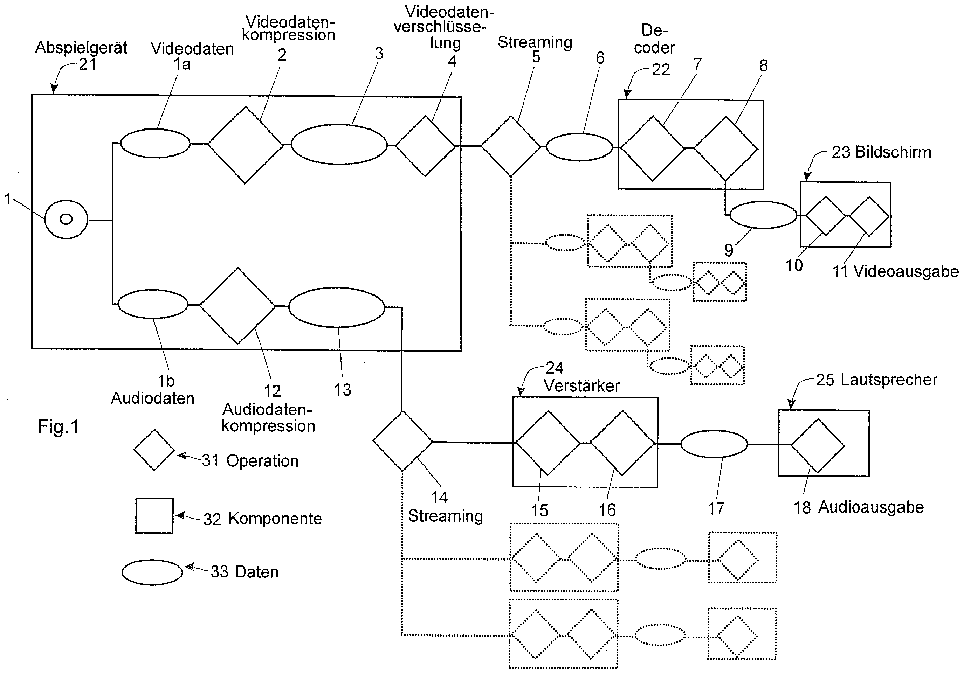

- Fig. 1: eine schematische Darstellung eines erfindungsgemäßen Datennetzwerkes.

In der Fig. 1 ist ein Datennetzwerk dargestellt, welches ein Abspielgerät 21, einen Decoder 22, einen Bildschirm 23, einen Verstärker 24 und einen Lautsprecher 25 umfasst. Zur Verdeutlichung sind diese Komponenten 32 rechteckig dargestellt, durchgeführte Operationen 31 werden als Raute und Daten 33 als Ellipse typisiert.

Das Datennetzwerk ist Teil eines In-flight Entertainment Systems, bei dem Daten eines Datenträgers 1 in dem Abspielgerät 21 ausgelesen und an zwei Wiedergabegeräten, hier am Bildschirm 23 und am Lautsprecher 25, wiedergegeben werden. Das Datennetzwerk kann jedoch eine Vielzahl weiterer, hier in gestrichelter Form angedeutete Decoder, Verstärker und Wiedergabegeräte umfassen.

Aus dem Datenträger 1 werden sowohl Videodaten la als auch Audiodaten 1b ausgelesen. Nachdem die Audio- und Videodaten 1a, 1b ausgelesen sind, werden sie auf getrenntem, insbesondere deterministischem Wege zum jeweiligen Ausgabegerät, dem Bildschirm 23 und dem Lautsprecher 25, weitergeleitet. Deterministisch bedeutet dabei, dass der Weg der Weiterleitung vorbestimmt und festgelegt ist, wodurch auch die Laufzeit vorbestimmt und vorzugsweise konstant ist.

Die Videodaten la werden innerhalb des Abspielgerätes 21 durch eine Videodatenkompression 2 zu einem komprimierten Videodatensignal 3 verarbeitet. Das Datenformat kann beispielsweise ein H.264 oder MPEG2 sein. Anschließend erfolgt im Abspielgerät 21 eine Videodatenverschlüsselung 4, bei der die komprimierten Videodaten la durch einen kryptographischen Algorithmus verschlüsselt werden. Der Algorithmus richtet sich beispielsweise nach den Anforderungen des eingesetzten DRM-Systems.

Anschließend werden die verschlüsselten, komprimierten Videodaten la über eine Ethernetverbindung in einer kontinuierlichen Videoübertragung 5 an einen Decoder 22 gesendet. Die Daten können jedoch bei Bedarf auch gleichzeitig an mehrere Decoder 22 gesendet werden. Der Vorgang der kontinuierlichen Datenübertragung 5 wird auch als "Datenstreaming" oder nur "Streaming" bezeichnet. Wie erwähnt bedeutet der Begriff "kontinuierliche Datenübertragung" im Rahmen der vorliegenden Anmeldung insbesondere "Streaming Media", wobei ausschließlich Audio/Video-Signale, und gegebenenfalls damit unmittelbar zusammenhängende Steuerdaten, kontinuierlich übertragen werden.

Der Decoder 22 entschlüsselt das verschlüsselte Videodatensignal 6. An die Videodatenentschlüsselung 7 folgt im Decoder 22 anschließend eine Videodatendekompression 8, bei der die entschlüsselten Daten dekomprimiert werden. Über eine HDMI-Videodatenübertragung 9 wird das Signal zu dem Bildschirm 23 weitergeleitet, indem eine digital/analoge Videodatenumwandlung 10 erfolgt, so dass anschließend die Videoausgabe 11 für den Nutzer erfolgen kann.

Die Audiodaten 1b gelangen getrennt von den Videodaten la vom Datenträger 1 zum Lautsprecher 25. Nach dem Auslesen der Audiodaten 1b erfolgt innerhalb des Abspielgerätes 21 eine Audiodatenkompression 12, bei der die Audiodaten 1b beispielsweise in das AAC oder MP3 Format komprimiert werden. Das komprimierte Audiodatensignal 13 wird unverschlüsselt vom Abspielgerät 21 zu einem Verstärker 24 gesendet, wobei diese Übertragung ebenfalls über eine Ethernetverbindung im "Streaming" Verfahren, also als kontinuierliche Audiodatenübertragung 14, an den Verstärker 24 erfolgt.

Der Verstärker 24 wandelt die Digitaldaten in einer digital/analogen Audiodatenumwandlung 15 in ein analoges Audiosignal 17 um.

Bevor das analoge Audiodatensignal 17 zur Ausgabe an den Lautsprecher 25 gesendet wird, erfolgt eine Verzögerung der Audiodaten 1b innerhalb des Verstärkers. Eine Funktion zur Audioverzögerung 16, die beispielsweise in Software implementiert ist, verzögert das Signal um eine vorbestimmte Zeitdauer. Die Verzögerung 16 wird dabei nicht dynamisch zur Laufzeit ermittelt, sondern liegt aufgrund des Designs der Komponenten des Datennetzwerks fest, d.h. sie wird vorteilhaft bereits im Designstadium des Datennetzwerks festgelegt. Die Verzögerung 16 ist demnach vorteilhaft statisch und/oder zeitlich ungesteuert bzw. ungeregelt.

Diese vorbestimmte Zeitdauer entspricht dem Differenzbetrag der Laufzeiten von Audio- und Videodaten 1a, 1b für ein System ohne eine solche Verzögerungsfunktion. In der Regel ist die Laufzeit der Videodaten la größer als die Laufzeit der Audiodaten lb, da die Videodaten la ver- und entschlüsselt werden müssen. Die Zeitdauer ist also so bemessen, dass die Audio- und Videodaten 1a, 1b zeitgleich wiedergegeben werden, obwohl die Audiodaten 1b eigentlich schneller wiedergegeben werden könnten.

Nach dem zuvor Gesagten werden die Audio- und Videodaten vorteilhaft bereits in dem Abspielgerät 21 in getrennte Datenströme aufgeteilt. Die getrennten Audio- und Videodaten werden vorteilhaft getrennt voneinander komprimiert (Operationen 2 bzw. 12). Die encodierten Audio- und Videodaten werden insbesondere getrennt voneinander von dem Anspielgerät 21 an den Video-Decoder 22 bzw. den Verstärker 24 übermittelt bzw. gestreamt.

Durch ein erfindungsgemäßes Datennetzwerk ist es möglich, dass mehrere Wiedergabegeräte, wie beispielsweise weitere Bildschirme 23 und weitere Lautsprecher 25, zugeschaltet werden können, und diese auch den kontinuierlichen Audio- und Videodatenstrom empfangen können.

Wenn vor den Wiedergabegeräten baugleiche Decoder 22 und Verstärker 24 vorgesehen werden, ist die Wiedergabe nicht nur an zusammengehörenden Endgeräten (wie Bildschirm 23 und Lautsprecher 25), sondern an allen im Netzwerk angeschlossen Wiedergabegeräten synchron. Diese synchrone Wiedergabe auf allen Endgeräten ist insbesondere im Flugzeug vorteilhaft, da verschiedene Endgeräte gleichzeitig wahrnehmbar sind und Synchronisationsunterschiede so besonders störend auffallen.

### Bezugszeichenliste:

- 1: Datenträger
- 1a: Videodaten
- 1b: Audiodaten
- 2: Videodatenkompression
- 3: komprimiertes Videodatensignal
- 4: Videodatenverschlüsselung
- 5: kontinuierliche Videodatenübertragung (streaming)
- 6: verschlüsseltes Videodatensignal
- 7: Videodatenentschlüsselung
- 8: Videodatendekompression
- 9: HDMI-Videodatenübertragung
- 10: digital/analoge Videodatenumwandlung
- 11: Videoausgabe
- 12: Audiodatenkompression
- 13: komprimiertes Audiodatensignal
- 14: kontinuierliche Audiodatenübertragung (streaming)
- 15: digital/analoge Audiodatenumwandlung
- 16: Audiodatenverzögerung
- 17: analoges Audiodatensignal
- 18: Audioausgabe
- 21: Abspielgerät
- 22: Decoder
- 23: Bildschirm
- 24: Verstärker
- 25: Lautsprecher
- 31: Operation
- 32: Komponente
- 33: Daten

## Patentansprüche

1. Datennetzwerk eines In-flight Entertainment Systems zur Wiedergabe von Audio- und Videodaten (1b, 1a), welches ein Abspielgerät (21) zum Auslesen der Audio- und Videodaten (1b, la) von einem Datenträger (1), einen Decoder (22) und einen Verstärker (24) umfasst, wobei die in dem Abspielgerät (21) ausgelesenen Audiodaten (1b) an den Verstärker (24) übermittelbar sind, wobei das Datennetzwerk dazu eingerichtet ist, die Videodaten (la), welche hochauflösend ausgeführt sind, im Wesentlichen synchron mit den Audiodaten (1b) wiederzugeben, wobei die Latenz zwischen der Wiedergabe der Audio- und Videodaten (1b, la) unter 0,5 Sekunden liegt, **dadurch gekennzeichnet, dass** ausgelesene Videodaten (la) verschlüsselt an den Decoder (22) übermittelbar sind, und das Datennetzwerk dazu eingerichtet ist, die Videodaten und die Audiodaten getrennt voneinander an den Decoder (22) bzw. den Verstärker (24) zu übermitteln, wobei die Komponenten des Datennetzwerks, die zum Verarbeiten der Audio- und Videodaten (1b, la) eingesetzt werden, so zusammengestellt sind, dass die Zeitdauer ihrer Operationen deterministisch und konstant ist, so dass auch die Laufzeiten der Audiodaten und der Videodaten vorbestimmt und konstant sind, und die Datenwiedergabe der Audiodaten oder der Videodaten (1b, la) an einem Ausgabegerät um eine vorbestimmte Zeitdauer verzögert ist, die dem Differenzbetrag der Laufzeiten der Audio- und Videodaten (1b, la) entspricht.

2. Datennetzwerk nach Anspruch 1, **dadurch gekennzeichnet, dass** die hochauflösenden Videodaten (la) eine Auflösung von mindestens 720p aufweisen.

3. Datennetzwerk nach einem der vorangehenden Ansprüche, **dadurch gekennzeichnet, dass** das Datennetzwerk ein digitales Rechtemanagement System (DRM System) umfasst.

4. Datennetzwerk nach einem der vorangehenden Ansprüche, **dadurch gekennzeichnet, dass** die Datenwiedergabe um eine Zeitdauer verzögert ist, die dem Differenzbetrag der Laufzeit der Audio- und Videodaten (1b, 1a) entspricht.

5. Verfahren zur Wiedergabe von Audio- und Videodaten (1b, 1a) über ein Datennetzwerk eines In-flight Entertainment Systems, wobei die Videodaten (1a) die Schritte
a) Datenkompression
b) Datenverschlüsselung
c) kontinuierliche Datenübertragung
d) Datenentschlüsselung
e) Datendekompression
f) digital/analoge Datenumwandlung und
g) Datenwiedergabe
durchlaufen und die Audiodaten (1b) zumindest die Schritte a), c), e), f) und g) durchlaufen, wobei die Audio- und Videodaten (1b, 1a) zumindest beim Schritt c) getrennt voneinander über das Datennetzwerk übermittelt werden und die Videodaten (1a), welche hochauflösend ausgeführt sind, im Wesentlichen synchron mit den Audiodaten (1b) wiedergegeben werden, wobei die Latenz zwischen der Wiedergabe der Audio- und Videodaten (1b, 1a) unter 0,5 Sekunden liegt, **dadurch gekennzeichnet, dass** die Komponenten des Datennetzwerks, die zum Verarbeiten der Audio- und Videodaten (1b, 1a) eingesetzt werden, so zusammengestellt werden, dass die Zeitdauer ihrer Operationen deterministisch und konstant ist, so dass auch die Laufzeiten der Audiodaten und der Videodaten vorbestimmt und konstant sind, und die Datenwiedergabe der Audiodaten oder der Videodaten (1b, 1a) an einem Ausgabegerät um eine vorbestimmte Zeitdauer verzögert ist, die dem Differenzbetrag der Laufzeiten der Audio- und Videodaten (1b, 1a) entspricht.

6. Verfahren nach Anspruch 5, **dadurch gekennzeichnet, dass** die Audio- und Videodaten (1b, 1a) die Schritte a), c) e) und f) getrennt voneinander durchlaufen.

7. Verfahren nach einem der Ansprüche 5 oder 6, **dadurch gekennzeichnet, dass** die Komponenten des Datennetzwerks, die zum Verarbeiten der Audio- und Videodaten (1b, 1a) eingesetzt werden, ihre Operationen in vorherbestimmten Laufzeiten durchführen.

8. Verfahren nach einem der Ansprüche 5 bis 7, **dadurch gekennzeichnet, dass** im Zuge des Schrittes e) oder f) die Audiodaten (1b) zur Synchronisation mit den Videodaten (la) um eine vorbestimmte Zeitdauer verzögert werden.

9. Verfahren nach einem der Ansprüche 5 bis 8, **dadurch gekennzeichnet, dass** im Schritt a) Audiodaten (1b) mit maximal 48 kHz und 16 Bits erzeugt werden.

10. Verfahren nach einem der Ansprüche 5 bis 9, **dadurch gekennzeichnet, dass** im Schritt a) Videodaten (1a) durch eine Intra- und Interframe Kodierung erzeugt werden.

11. Verfahren nach einem der Ansprüche 5 bis 10, **dadurch gekennzeichnet, dass** die Audio- und Videodaten (1b, 1a) in einem Abspielgerät (21) voneinander getrennt und anschließend auch getrennt voneinander an einen Verstärker (24) und/oder einen Decoder (22) übermittelt werden.

12. Abspielgerät (21) zum Auslesen von Audio- und Videodaten (1b, 1a) eines Datenträgers (1) für ein In-flight Entertainment System, wobei die in dem Abspielgerät (21) ausgelesenen Audiodaten (1b) an einen Verstärker (24) übermittelbar sind, **dadurch gekennzeichnet, dass** ausgelesene Videodaten (1a) verschlüsselt an einen Decoder (22) übermittelbar sind, und die Audiodaten (1b) und die verschlüsselten Videodaten (1a), welche hochauflösend ausgeführt sind, von dem Abspielgerät (21) getrennt voneinander an den Verstärker (24) und/oder den Decoder (22) übermittelbar sind, wobei die Komponenten des Abspielgeräts (21), die zum Verarbeiten der Audio- und Videodaten (1b, 1a) eingesetzt werden, so zusammengestellt sind, dass die Zeitdauer ihrer Operationen deterministisch und konstant ist, so dass auch die Laufzeiten der Audiodaten und der Videodaten vorbestimmt und konstant sind, wobei die Datenwiedergabe der Audiodaten oder der Videodaten (1b, 1a) an einem Ausgabegerät um eine vorbestimmte Zeitdauer verzögert ist, die dem Differenzbetrag der Laufzeiten der Audio- und Videodaten (1b, 1a) entspricht, wobei die Latenz zwischen der Wiedergabe der Audio- und Videodaten (1b, 1a) unter 0,5 Sekunden liegt.

## Claims

1. Data network in an in-flight entertainment system for playing back audio and video data (1b, 1a), which comprises a playback device (21) for reading out the audio and video data (1b, 1a) from a data carrier (1), a decoder (22) and an amplifier (24), wherein the audio data (1b) read out in the playback device (21) can be transmitted to the amplifier (24), wherein the data network is configured to play back the video data (1a), which are in high resolution, substantially synchronously with the audio data (1b), wherein the latency between the playback of the audio and video data (1b, 1a) is below 0.5 seconds, **characterised in that** read-out video data (1a) can be transmitted in an encrypted manner to the decoder (22), and the data network is configured to transmit the video data and the audio data separately from one another to the decoder (22) or the amplifier (24), respectively, wherein the components of the data network which are used for processing the audio and video data (1b, 1a) are assembled such that the duration of the operations thereof is deterministic and constant so that the runtimes of the audio data and the video data also are predetermined and constant, and the data playback of the audio data or the video data (1b, 1a) on an output device is delayed by a predetermined time period which corresponds to the difference between the runtimes of the audio and video data (1b, 1a).

2. Data network according to claim 1, **characterised in that** the high-resolution video data (1a) have a resolution of at least 720p.

3. Data network according to any of the preceding claims, **characterised in that** the data network comprises a digital rights management system (DRM system).

4. Data network according to any of the preceding claims, **characterised in that** the data playback is delayed by a time period which corresponds to the difference between the runtimes of the audio and video data (1b, 1a).

5. Method for playing back audio and video data (1b, 1a) via a data network in an in-flight entertainment system, the video data (1a) passing through the steps of
a) data compression
b) data encryption
c) continuous data transmission
d) data decryption
e) data decompression
f) digital-analogue data conversion and
g) data playback,
and the audio data (1b) passing through at least steps a), c), e), f) and g), wherein the audio and video data (1b, 1a) are transmitted separately from one another via the data network at least in step c), and the video data (1a), which are in high resolution, are played back substantially synchronously with the audio data (1b), wherein the latency between the playback of the audio and video data (1b, 1a) is below 0.5 seconds, **characterised in that** the components of the data network which are used for processing the audio and video data (1b, 1a) are assembled such that the duration of the operations thereof is deterministic and constant so that the runtimes of the audio data and the video data also are predetermined and constant, and the data playback of the audio data or the video data (1 b, 1a) on an output device is delayed by a predetermined time period which corresponds to the difference between the runtimes of the audio and video data (1b, 1a).

6. Method according to claim 5, **characterised in that** the audio and video data (1b, 1a) pass through the steps a), c), e) and f) separately from one another.

7. Method according to either claim 5 or claim 6, **characterised in that** the components of the data network which are used for processing the audio and video data (1b, 1a) carry out their operations in predetermined runtimes.

8. Method according to any of claims 5 to 7, **characterised in that**, during step e) or f), the audio data (1b) are delayed by a predetermined time period for the purpose of synchronisation with the video data (1a).

9. Method according to any of claims 5 to 8, **characterised in that**, in step a), audio data (1b) of at most 48 kHz and 16 bits are generated.

10. Method according to any of claims 5 to 9, **characterised in that**, in step a), video data (1a) are generated by means of intra-frame and inter-frame coding.

11. Method according to any of claims 5 to 10, **characterised in that** the audio and video data (1b, 1a) are transmitted separately from one another in a playback device (21) and subsequently also separately from one another to an amplifier (24) and/or a decoder (22).

12. Playback device (21) for reading out audio and video data (1b, 1a) from a data carrier (1) for an in-flight entertainment system, wherein the audio data (1b) read out in the playback device (21) can be transmitted to an amplifier (24), **characterised in that** read-out video data (1a) can be transmitted in an encrypted manner to a decoder (22), and the audio data (1b) and the encrypted video data (1a), which are in high resolution, can be transmitted separately from one another from the playback device (21) to the amplifier (24) and/or the decoder (22), wherein the components of the playback device (21) which are used for processing the audio and video data (1b, 1a) are assembled such that the duration of the operations thereof is deterministic and constant so that the runtimes of the audio data and the video data also are predetermined and constant, wherein the data playback of the audio data or the video data (1b, 1a) on an output device is delayed by a predetermined time period which corresponds to the difference between the runtimes of the audio and video data (1b, 1a), wherein the latency between the playback of the audio and video data (1b, 1a) is below 0.5 seconds.

## Revendications

1. Réseau de données d'un système de divertissement de bord destiné à la restitution de données audio et vidéo (1b, la), comprenant un appareil de lecture (21) destiné à lire les données audio et vidéo (1b, la) à partir d'un support de données (1), un décodeur (22) et un amplificateur (24), dans lequel les données audio (1b) lues dans l'appareil de lecture (21) sont transmissibles à l'amplificateur (24), dans lequel le réseau de données est disposé de façon à restituer les données vidéo (la), qui sont réalisées en haute résolution, de façon essentiellement synchrone avec les données audio (1b), dans lequel la latence entre la restitution des données audio et vidéo (1b, la) est inférieure à 0,5 seconde, **caractérisé en ce que** les données vidéo (la) lues sont transmissibles chiffrées au décodeur (22), et le réseau de données est disposé de façon à transmettre les données vidéo et les données audio séparément les unes des autres respectivement au décodeur (22) et à l'amplificateur (24), dans lequel les composants du réseau de données, qui sont utilisés pour le traitement des données audio et vidéo (1b, la), sont assemblés de telle sorte que la durée de leurs opérations est déterministe et constante, de sorte que les périodes des données audio et des données vidéo sont également prédéterminées et constantes, et la restitution des données audio ou des données vidéo (1b, la) sur un périphérique de sortie est décalée d'une durée prédéterminée, qui correspond à la différence des périodes des données audio et vidéo (1b, la).

2. Réseau de données selon la revendication 1, **caractérisé en ce que** les données vidéo (la) à haute résolution possèdent une résolution d'au moins 720p.

3. Réseau de données selon l'une des revendications précédentes, **caractérisé en ce que** le réseau de données comprend un système de gestion des droits numériques (système DRM).

4. Réseau de données selon l'une des revendications précédentes, **caractérisé en ce que** la restitution des données est décalée d'une durée correspondant à la différence des périodes des données audio et vidéo (1b, la).

5. Procédé de restitution de données audio et vidéo (1b, la) au moyen d'un réseau de données d'un système de divertissement de bord, dans lequel les données vidéo (la) passent par les étapes
a) compression des données
b) chiffrage des données
c) transfert continu des données
d) déchiffrage des données
e) décompression des données
f) conversion numérique/analogique des données et
g) restitution des données
et les données audio (1b) passent au moins par les étapes a), c), e), f) et g), dans lequel les données audio et vidéo (1b, la) sont transmises séparément l'une de l'autre par le réseau de données au moins au cours de l'étape c) et les données vidéo (la), réalisées en haute résolution, sont restituées de façon essentiellement synchrone avec les données audio (1b), dans lequel la latence entre la restitution des données audio et vidéo (1b, la) est inférieure à 0,5 seconde, **caractérisé en ce que** les composants du réseau de données, qui sont utilisés pour le traitement des données audio et vidéo (1b, la), sont assemblés de telle sorte que la durée de leurs opérations est déterministe et constante, de sorte que les périodes des données audio et des données vidéo sont également prédéterminées et constantes, et la restitution des données audio ou des données vidéo (1b, la) sur un périphérique de sortie est décalée d'une durée prédéterminée, qui correspond à la différence des périodes des données audio et vidéo (1b, la).

6. Procédé selon la revendication 5, **caractérisé en ce que** les données audio et vidéo (1b, la) passent par les étapes a), c), e) et f) séparément les unes des autres.

7. Procédé selon l'une des revendications 5 ou 6, **caractérisé en ce que** les composants du réseau de données, qui sont utilisés pour le traitement des données audio et vidéo (1b, la), effectuent leurs opérations dans des périodes prédéfinies.

8. Procédé selon l'une des revendications 5 à 7, **caractérisé en ce qu'**au cours de l'étape e) ou f) les données audio (1b) sont décalées d'une période prédéterminée pour la synchronisation avec les données vidéo (la).

9. Procédé selon l'une des revendications 5 à 8, **caractérisé en ce qu'**au cours de l'étape a) les données audio (1b) sont produites au maximum à 48 kHz et 16 Bits.

10. Procédé selon l'une des revendications 5 à 9, **caractérisé en ce qu'**au cours de l'étape a) les données vidéo (la) sont produites par un encodage intra- et inter-trame.

11. Procédé selon l'une des revendications 5 à 10, **caractérisé en ce que** les données audio et vidéo (1b, la) sont séparées les unes des autres dans un appareil de lecture (21) et ensuite transmises également séparément les unes des autres à un amplificateur (24) et/ou à un décodeur (22).

12. Appareil de lecture (21) destiné à lire des données audio et vidéo (1b, la) d'un support de données (1) pour un système de divertissement de bord, dans lequel les données audio (1b) lues dans l'appareil de lecture (21) sont transmissibles à un amplificateur (24), **caractérisé en ce que** les données vidéo (la) lues sont transmissibles chiffrées à un décodeur (22), et les données audio (1b) et les données vidéo (la) chiffrées, réalisées en haute résolution, sont transmissibles séparément les unes des autres de l'appareil de lecture (21) à l'amplificateur (24) et/ou au décodeur (22), dans lequel les composants de l'appareil de lecture (21), qui sont utilisés pour le traitement des données audio et vidéo (1b, la), sont assemblés de telle sorte que la durée de leurs opérations est déterministe et constante, de sorte que les périodes des données audio et des données vidéo sont également prédéterminées et constantes, dans lequel la restitution des données audio ou des données vidéo (1b, la) sur un périphérique de sortie est décalée d'une durée prédéterminée, qui correspond à la différence des périodes des données audio et vidéo (1b, la), dans lequel la latence entre la restitution des données audio et vidéo (1b, la) est inférieure à 0,5 seconde.
